Europäisches Patentamt

European Patent Office

Office européen des brevets

(19)

(11) Veröffentlichungsnummer: **0 002 440**
**B1**

(12) **EUROPÄISCHE PATENTSCHRIFT**

(21) Anmeldenummer: **78101090.5**

(51) Int. Cl.³: **H 02 B 13/02**

(22) Anmeldetag: **06.10.78**

(54) **Ein- oder mehrphasig metallgekapselte, druckgasisolierte Hochspannungsschaltanlage**

(30) Priorität: **06.12.77 DE 2754691**

(43) Veröffentlichungstag der Anmeldung:
**27.06.79 Patentblatt 79/13**

(45) Bekanntmachung des Hinweises auf die Patenterteilung:
**21.01.81 Patentblatt 81/03**

(84) Benannte Vertragsstaaten:
**BE CH DE FR GB LU NL SE**

(56) Entgegenhaltungen:
**CH - A - 362 450**
**DE - A - 2 659 038**
**DE - C - 889 784**
**DE - C - 909 733**

(73) Patentinhaber: **SIEMENS AKTIENGESELLSCHAFT**
**Berlin und München**
**Postfach 22 02 61**
**D - 8000 München 22 (DE)**

(72) Erfinder: **Olsen, Willi**
**Am Laubwald 3**
**D - 1000 Berlin 13 (DE)**

Courier Press, Leamington Spa, England.

EP 0 002 440 B1

## Ein- oder mehrphasig metallgekapselte, druckgasisolierte Hochspannungsschaltanlage

Die Erfindung bezieht sich auf eine ein- oder mehrphasig metallgekapselte, druckgasisolierte Hochspannungsschaltanlage, deren Schaltfelder mehrere aneinander angrenzende, gasdicht geschottete Druckbehälter aufweisen, wobei jeweils für ein Feld in je einem ersten Druckbehälter alle zu einer Sammelschiene gehörenden Schaltgeräte und stromführenden Teile untergebracht sind, in einem zweiten Druckbehälter der Leistungsschalter und stromführende Teile und gegebenenfalls in einem dritten Druckbehälter alle anschlußseitig erforderlichen Geräte und stromführenden Teile wie Trennschalter, Kabel - oder Freileitungs-Anschlußelemente und gegebenenfalls Erder.

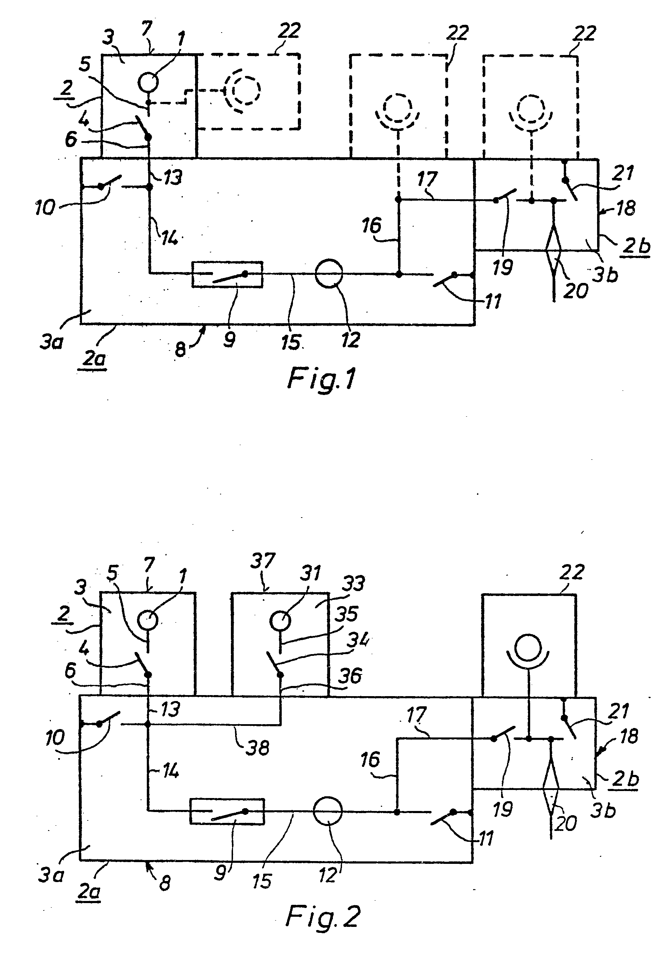

Eine derartige Anordnung ist aus der Figur 1 der DE—PS 889 784 bekannt. Bei dieser bekannten Anordnung is der Ausgang des Leistungsschalters unauftrennbar mit zwei Durchführungen verbunden, die jeweils zu einem anderen Druckbehälter, der eine Sammelschiene enthält, führen. Eine derartige Anordnung wird in dieser Patentschrift als nicht ausführbar bezeichnet, da beim Drucklosmachen eines Sammelschienensystems die Durchführung überschlagen würde, die vom Behälter des Leistungsschalters her unter Spannung steht. Zur Vermeidung dieses Nachteils ist es bekannt, wesentlich mehr Druckbehälter vorzusehen, insbesondere getrennte Druckbehälter für die Sammelschienentrennschalter. Das Vorsehen einer Vielzahl unterschiedlich geformter Behälter, die gasdicht geschottet und im wesentlichen in Reihe geschaltet sind, erfordert eine entsprechend große Anzahl von Flanschverbindungsstellen, die gasdicht sein müssen, sowie eine konstruktionsbedingte aufwendige Lagerhaltung für die verschiedenartigen Behälter.

Weiterhin ist es aus der DE—PS 889 784 bekannt, die Sammelschienen, Sammelschienentrennschalter und Leistungsschalter in einem gemeinsamen Druckbehälter unterzubringen. Mit dieser Konstruktion ist jedoch der Nachteil verbunden, daß im Störungsfall und bei Wartungs und Revisionsarbeiten in einem Feld die gesamte Anlage abgeschaltet werden muß, wenn aus diesem Druckbehälter das Gas abgelassen wird. Wegen der geringen Isolationsabstände wären bei nichtabgeschalteter Anlage Überschläge zu befürchten.

Aus dem Prospekt der Firma COQ, Utrecht, "Trisep Metal-Clad $SF_6$ Insulated Switchgear 100 kV — 245 kV" ist eine dreiphasige Hochspannungsschaltanlage bekannt, bei der ein Teil der zur Sammelschiene gehörenden Trennschalter im Behälter der Sammelschiene angeordnet und der weitere Teil im Leistungsschalterbehälter untergebracht ist. Bei einem im Leistungsschalterbehälter auftretenden Störlichtbogenfehler, der z. B. zur Verschweißung der Trennschalterkontakte führt, lassen sich der Leistungsschalter und die von dem Behälter umschlossenen Geräte nur dann reparieren, wenn auch die zugehörige Sammelschiene, d. h. ein wesentlicher Teil der Anlage, außer Betrieb gesetzt wird. Da die Sammelschiene für die Dauer der Reparatur zumindest des Trennschalters abgeschaltet bleiben muß, ist die betriebstechnische Verfügbarkeit, insbesondere bei Anlagen mit nur einem Sammelschienensystem, eingeschränkt.

Der Leistungsschalter ist bei dieser bekannten Anlage in einem eigenen Druckbehälter untergebracht, der gegenüber dem Behälter für Stromwandler, Arbeitserder und anschlußseitig erforderliche Geräte über eine Trennschalterausführungsform geschottet ist, die ähnlich wie die Sammelschienentrenner je eine Trennstrecke im Leistungsschaltergehäuse und eine weitere elektrisch in Reihe geschaltete Trennstrecke aufweisen, die im Behälter für den Stromwandler, Arbeitserder und anschlußseitig erforderliche Geräte untergebracht ist. Die Funktionsfähigkeit der Trennschalter ist damit immer vom Zustand zweier unterschiedlicher Gasräume abhängig.

Der Erfindung liegt die Aufgabe zugrunde, eine Hochspannungsschaltanlage der eingangs genannten Art anzugeben, bei der mittels einer geringstmöglichen Anzahl von Druckbehältern bzw. Kapselungsabschnittsformen eine möglichst hohe betriebstechnische Verfügbarkeit gewährleistet ist.

Nach der Erfindung wird dies dadurch gelöst, daß in dem zweiten Druckbehälter (8) außer dem Leistungsschalter (9) auch Stromwandler (12) und Arbeitserder (10, 11) angeordnet sind, und daß durch die feldspezifischen stromführenden Teile (13, 14, 15, 16, 17, 38, 48), in diesem zweiten Druckbehälter (8) in unterschiedlichen Feldschaltungen diese Geräte untereinander und mit den Geräten angrenzender Druckbehälter desselben Feldes unterschiedlich verknüpft sind.

Durch Anwendung der Erfindung ist es möglich, mit drei grundsätzlichen Behälterstrukturen eine Anlage zu konzipieren, bei der sich Störungen in einem Abzweig, z. B. im zweiten oder dritten Behälter, auf die Sammelschiene nur kurzzeitig, nämlich nur bis zum Öffnen der Sammelschienentrennschalter im ersten Behälter, auswirken können. Mit maximal drei Druckbehälter typen lassen sich alle möglichen Feldschaltungen im vorligenden Fall verwirklichen. Die Fertigungstechnik, insbesondere im Bereich des Behälterbaues, wird durch die Erfindung wesentlich vereinfacht. Montage - und Prüfungsarbeiten können zum überwiegenden Teil an Baugruppen vorgenommen werden, die komplett in die Behälter eingebracht werden. Mit der Erfindung ist es möglich, unterschiedliche feldspezifische Geräte, Anordnungen und Schaltungen in besonders einfacher Weise mit einer geringen Anzhal von Behältertypen zu realisieren. Hierzu ist nämlich nur die Leiterführung und die Geräteanordnung innerhalb ein und desselben Behältertyps zu ändern. Schwierigkeiten der Aneinanderreihung verschiedenartiger Behälter in unterschiedlicher räumlicher Zuordnung aufgrund unterschiedlicher Schaltbilder sind dammit vermieden. Ein weiterer wesentlicher Vorteil der Erfindung besteht darin, daß die Anzahl der Schotträume und damit die Zahl der Dichtungsstellen pro Feld gering gehalten ist, so daß die Gefahr von Gasverlusten und die damit verbundene Verminderung der Spannungsfestigkeit weitgehend beseitigt ist.

Es ist weiterhin besonders vorteilhaft, wenn der zweite Druckbehälter rohrförmig ausgebildet und mit horizontaler Rohrachse derart angeordnet ist, daß er den ersten und den dritten Druckbehälter trägt.

Anhand der Zeichnung sind Ausführungsbeispiele der erfindungsgemäßen Hochspannungsschaltanlage beschrieben und die Wirkungsweise erläutert.

In Fig. 1 ist ein Schaltfeld einer Hochspannungsschaltanlage schematisch gezeichnet. Dieses Schaltfeld ist gemeinsam mit anderen Schaltfeldern mit einer Sammelschiene verbunden. Die Sammelschiene 1, die ein- oder mehrphasig gekapselt sein kann, ist mit einer Metallkapselung 2 versehen. Im Innenraum 3 der Kapselung 2 ist $SF_6$ unter einem Druck von beispielsweise 4 bar eingefüllt, das die Druckgasisolierung bildet. Die Leiter des Sammelschienensystems sind über nicht weiter dargestellte Stützisolatoren gegenüber der Kapselung 2 abgestützt. Die Sammelschiene 1 selbst und die zugehörigen Schaltgeräte, nämlich die Sammelschienentrenner 4 und die stromführenden Teile 5, 6, sind in einem ersten Druckbehälter 7 angeordnet, der von der Kapselung 2 gebildet wird. Dieser Druckbehälter 7 ist mit einem zweiten Druckbehälter 8 formschlüssig verbunden, der den Leistungsschalter 9, Arbeitserder 10, 11, den Stromwandler 12 sowie die feldspezifischen stromführenden Teile 13, 14, 15, 16, 17 enthält. Der zweite Druckbehälter 8 wird von einer Kapselung 2a gebildet, in deren Innenraum 3a ebenfalls Schwefelhexafluorid unter einem Druck von beispielsweise 6 bar eingefüllt ist. Der zweite Druckbehälter 8 enthält die Geräte und stromführenden Teile für eine oder mehrere Phasen eines Drehstromsystems.

Mit dem Druckbehälter 8 ist ein dritter Druckbehälter 18 formschlüssig verbunden, der alle anschlußseitig erforderlichen Geräte und stromführenden Teile des Feldes enthält. Im dargestellten Ausführungsbeispiel enthält der Druckbehälter 18 einen Kabeltrenner 19, einen Kabelanschluß 20 und einen Schnellerder 21. Der Druckbehälter 18 wird von der Kapselung 2b gebildet, in deren Innenraum 3b Schwefelhexafluorid unter einem Druck von beispielsweise 4 bar als Druckgasisolierung eingefüllt ist. Die Innenräume 3, 3a und 3b sind an den Verbindungsstellen der Behälter 7, 8, 18 gasdicht geschottet.

An die in Fig. 1 dargestellte Schaltanlage können im Bedarfsfall druckgasisolierte, gekapselte Spannungswandler 2, wie gestrichelt dargestellt, angeschlossen werden. Hierfür sind die Spannungswandler 22 mit jedem der Druckbehälter 7, 8, und 18 über vorbereitete Anschlußstellen koppelbar. Die Druckgasisolierung der Spannungswandler kann selbständig oder mit der Isolierung des Anschlußbehälters gastechnisch verbunden sein.

Der zweite Druckbehälter 8 ist rohrfömig ausgebildet und mit horizontaler Rohrachse derart angeordnet, daß er den ersten Druckbehälter 7 und den dritten Druckbehälter 18 trägt.

Die Figur 2 zeigt ein Schaltfeld einer Hochspannungsschaltanlage in ein- oder mehrphasiger Ausführung für ein Doppelsammelschienensystem, d. h. in diesem Ausführungsbeispiel ist eine zusätzliche Sammelschiene 31 vorgesehen, die über einen eigenen Sammelschienentrenner 34 im Innenraum 33 eines Druckbehälters 37 angeordnet ist, der mit dem Druckbehälter 8 formschlüssig verbunden ist. Im übrigen sind gleiche Teile mit gleichen Besugszeichen versehen. Durch Anordnung eines zweiten Sammelschienensystems 31 ist im Behälter 8 eine stromführende Leitung 38 vorgesehen. Der Innenraum 33 ist gegenüber dem benachbarten Raum 3a gasdicht geschottet. Er nimmt zusätzlich stromführende Teile 35, 36 auf.

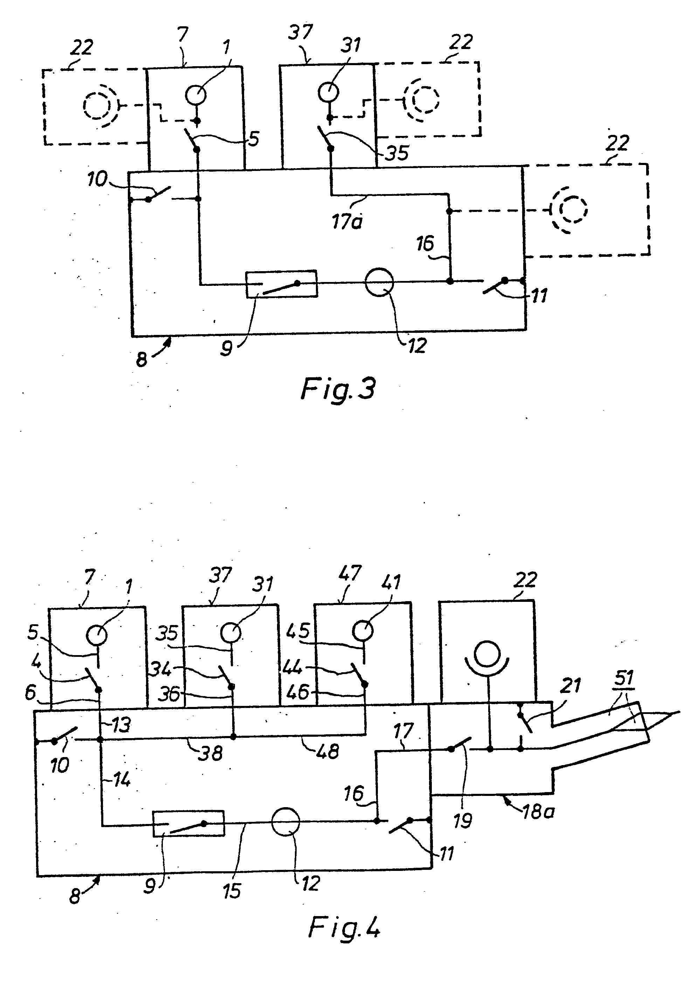

Bei dem in Fig. 3 dargestellten Ausführungsbeispiel handelt es sich um ein Schaltfeld, das als Kuppelfeld zur Verbindung zweier Sammelschienen 1, 31 bestimmt ist. Sieht man von den Möglichkeiten des Einsatzes gekapselter, druckgasisolierter Spannungswandler 22, die gestrichelt dargestellt sind, einmal ab, so ist bei diesem Schaltfeld der dritte Behälter 18 weggelassen, Es sind nur zwei Druckbehältertypen 7 bzw. 37 und 8 vorhanden. Im übrigen sind gleiche Teile mit gleichen Besugszeichen versehen. Obwohl die äußeren Konturen und damit der Raumbedarf unverändert sind, ergeben sich bei den vorgenannten Ausführungsbeispielen unterschiedliche innere Leiterführungen (vgl. Leiter 17a in Fig. 3 im Gegensatz zum Leiter 17 in Fig. 2).

Als weiteres Ausführungsbeispiel ist in Fig. 4 ein Schaltfeld dargestellt, das zum Anschluß einer Freileitung bestimmt und mit einem Dreifachsammelschienensystem verbunden ist. Bei diesem Ausführungsbeispiel trägt der Behälter 8 die Behälter 7, 37 und 47 der Sammelschienensysteme 1, 31 und 41, die mit Sammelschienentrennern 4, 34, 44 ausgestattet sind, und die stromführenden Teile 5, 6; 35, 36 und 45, 46 umfassen. Mit dem Behälter 8, der den Leistungsschalter 9 aufnimmt, sowie Arbeitserder 10, 11, den Stromwandler 12 und die stromführenden Teile 13, 14, 15, 16, 17 sowie 38 und 48 enthält, ist ferner ein Druckbehälter 18a mit einer Freiluftdurchführung 51 verbunden. Im Behälter 18a ist ein Freileitungsschalter 19 und ein Schnellerder 21 vorgesehen. Mit dem Druckbehälter 18a ist ein Spannungswandler 22 mit Zuordnung zur Leitungsseite angeordnet.

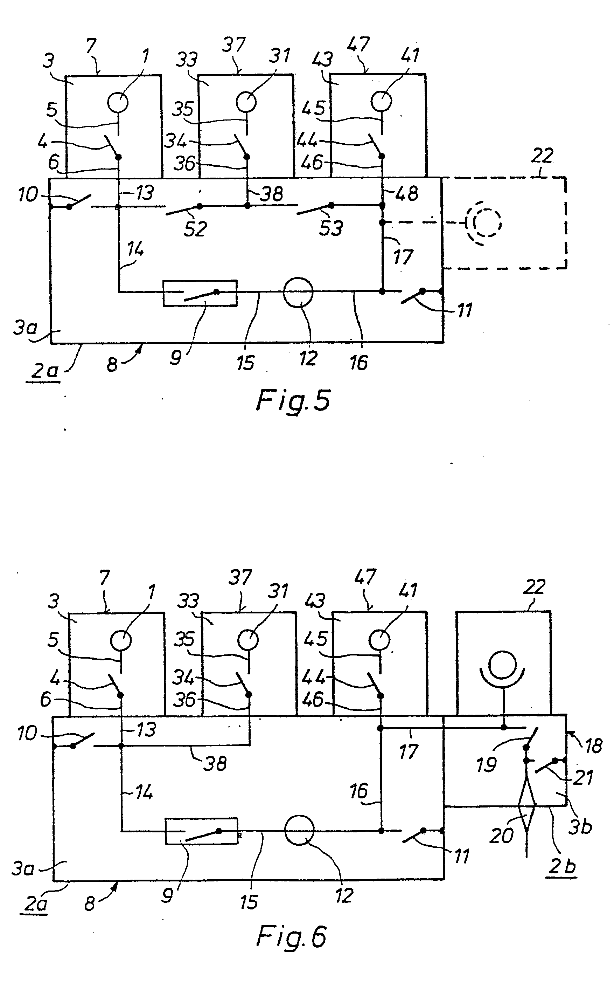

Die Figur 5 zeigt ein Kuppelschaltfeld für eine Dreifachsammelschiene, bei der in ähnlicher Anordnung wie in Fig. 3 nur zwei Behältertypen 8 und 7/37/47 verwendet werden, sofern man von der Anschlußmöglichkeit eines Spannungswandlers 22 absieht. Auch hierbei sind gleiche Teile mit gleichen Bezugszeichen versehen. Die Sammelschienen 7, 37, 47 sind über Trennschalter 52, 53 als feldspezifische Schaltungselemente kuppelbar.

Schließlich zeigt die Figur 6 ein Schaltfeld für ein Doppelsammelschienensystem mit Umgehungssammelschienen, bei der der Spannungswandler auf der Leistungsschalterseite angeordnet ist. Auch hierbei sind gleiche Teile mit gleichen Bezugszeichen versehen.

Bei allen Ausführungsbeispielen sind alle zu einer Sammelschiene 1, 31, 41 gehörenden Schaltgeräte 4, 34, 44 und stromführenden Teile 5, 35, 45; 6, 36, 46 in einem ersten Druckbehälter 7, 37, 47 untergebracht. Der Leistungsschalter 9, die Arbeitserder 10, 11 und die Stromwandler 12 je eines Feldes sowie die feldspezifischen stromführenden Teile 13, 14, 15, 16, 17, 38 und 48 sowie in Bedarfsfalle Trennschalter 52, 53 als Verknüpfungsstrombahnen sind in einem zweiten Druckbehälter 8, und alle anschlußseitig erforderlichen Geräte 19, 21, 20 und 51 sind in einem dritten Druckbehälter 18 bzw. 18a angeordnet. Die Variationsmöglichkeit ergibt sich bei im wesentlichen nur drei unterschiedlichen Behältertypen durch Baugruppen, die an das gewünschte Prinzipschaltbild angepaßt sind und von einer Stirnseite des rohrförmigen Behälters 8 aus in vormontierter Form eingebracht werden. Die Stirnseite enthält heirfür eine von einem Deckel verschließbare Montageöffnung.

Die Erfindung eignet sich bei einphasiger Kapselung der Geräte vorzugsweise für die an sich bekannte phasenbezogene Aufstellung einer Schaltanlage, bei der alle Phasen R, S, T in je einer Reihe angeordnet sind, wobei die drei Reihen parallel verlaufen.

Sofern eine dreiphasige Kapselung der Geräte und stromführenden Teile vorgesehen ist, wird die Projektierung vereinfacht.

**Patentansprüche**

1. Ein - oder mehrphasig metallgekapselte, druckgasisolierte Hochspannungsschaltanlage, deren Schaltfelder mehrere aneinander angrenzende, gasdicht geschottete Druckbehälter (7, 8, 18) aufweisen, wobei jeweils für ein Feld in einem ersten Druckbehälter (7, 37, 47) alle zu einer Sammelschiene (1, 31, 41) gehörenden Schaltgeräte (4, 34, 44) und stromführende Teile (5, 35, 45; 6, 36, 46) untergebracht sind und in einem zweiten Druckbehälter (8) der Leistungsschalter (9) und stromführende Teile (13, 14, 15, 16, 17, 38, 48) und gegebenenfalls in einem dritten Druckbehälter (18, 18a) alle anschlußseitig erforderlichen Geräte (19, 21, 20, 51) und stromführenden Teile, wie Trennschalter (19), Kabel - (20) oder Freileitungsanschlußelemente (51) und gegebenenfalls Erder (21), dadurch gekennzeichnet, daß in dem zweiten Druckbehälter (8) außer dem Leistungsschalter (9) auch Stromwandler (12) und Arbeitserder (10, 11) angeordnet sind, und daß durch die feldspezifischen stromführenden Teile (13, 14, 15, 16, 17, 38 48), in diesem zweiten Druckbehälter (8) in unterschiedlichen Feldschaltungen diese Geräte untereinander und mit den Geräten angrenzender Druckbehälter desselben Feldes unterschiedlich verknüpft sind.

2. Hochspannungsschaltanlage nach Anspruch 1, dadurch gekennzeichnet, daß der zweite Druckbehälter (8) in an sich bekannter Weise rohrförmig ausgebildet und mit horizontaler Rohrachse derart angeordnet ist, daß er den ersten (7, 37, 47) und den dritten Druckbehälter (18, 18a) trägt.

**Claims**

1. Single- or multi-phase metal clad pressurised gas-insulated high voltage switchgear, the switchboards of which have a plurality of pressure containers (7, 8, 18) which are located adjacent to one another and separated in gastight fashion, wherein for each switchboard, in a first pressure container (7, 37, 47) there are accommodated all switching devices (4, 34, 44) which are allocated to one bus bar (1, 31, 41) and current-carrying members (5, 35, 45; 6, 36, 46) and in a second pressure container (8) there are accommodated the circuit breaker (9) and current-carrying members (13, 14, 15, 16, 17, 38, 48) and possibly in a third pressure container (18, 18a) there are accommodated all the devices (19, 21, 20, 51) which are required at the connection side and current-carrying members, such devices including disconnection switches (19), cable terminal elements (20) or open-wire circuit terminal elements (51), and possibly earthing means (21) characterised in that in the second pressure container (8), in addition to the circuit breaker (9) there are also arranged current transformers (12) and earthing means (10, 11), and that via the current-carrying members in this second pressure container in different switchboards, these devices are differently connected together and with the devices of adjacent pressure containers of the same switchboard.

2. High voltage switchgear as claimed in Claim 1, characterised in that, the second pressure container (8) is designed in known manner to be tubular and is arranged with the tube axis horizontal so as to carry the first (7, 37, 47) and third pressure containers (18, 18a).

## Revendications

1. Installation de commutation à haute tension comportant un blindage métallique pour une ou plusieurs phases et isolée par un gaz sous pression et dont les panneaux de distribution possèdent plusieurs réservoirs de pression (7, 8, 18) adjacents les uns aux autres et cloisonnés de façon étanche au gaz, et dans laquelle respectivement pour un panneau tous les appareils de commutation (4, 34, 44) et les pièces parcourues par le courant (5, 35, 45; 6, 36, 46), associés à une barre omnibus (20, 31, 41), sont logés dans un premier réservoir de pression (7, 37, 47), tandis que le disjoncteur de puissance (9) et les pièces parcourues par le courant (13, 14, 15, 16, 17, 38, 48) sont disposés dans un second réservoir de pression (8) et que, éventuellement, tous les appareils (19, 21, 20, 51) et les pièces parcourues par le courant tels que des sectionneurs (19), des organes (20) de raccordement de câble ou des organes (51) de raccordement de lignes aériennes et éventuellement des dispositifs de mise à la terre (21), nécessaires du côté raccordement, sont logés dans un troisième réservoir de pression (18, 18a), caractérisée par le fait que également des transformateurs de courant (12) et des dispositifs de mise à la terre de service (10, 11) sont disposés, en plus du disjoncteur de puissance (9), dans le second réservoir de pression (8) et qu'au moyen des pièces parcourues par le courant spécifiques au panneau et situées dans ce second réservoir de pression, ces appareils sont combinés différemment entre eux et avec des appareils de réservoirs contigüs du même panneau, dans des circuits différents de panneau.

2. Installation de commutation à haute tension suivant la revendication 1, caractérisée par le fait que le second réservoir de pression (8) est réalisé de façon connue en soi avec une forme de tube et que l'axe de ce dernier est disposé horizontalement de telle manière que ledit réservoir porte le premier réservoir de pression (7, 37, 47) et le troisième réservoir de pression (18, 18a).

Fig.1

Fig.2

1

**Fig.3**

**Fig.4**

Fig. 5

Fig. 6